Europäisches Patentamt

European Patent Office

Office européen des brevets

(11) Publication number: **0 334 078**
**A2**

# (12) EUROPEAN PATENT APPLICATION

(21) Application number: 89103769.9

(22) Date of filing: 03.03.89

(51) Int. Cl.⁴: **C02F 1/74 , C02F 1/32**

(30) Priority: 23.03.88 IT 1990188

(43) Date of publication of application:
27.09.89 Bulletin 89/39

(84) Designated Contracting States:
AT BE CH DE ES FR GB GR IT LI LU NL SE

(71) Applicant: ENIRICERCHE S.p.A.
Corso Venezia 16
I-20121 Milan(IT)

(72) Inventor: Borgarello, Enrico
C.so Grosseto 274
Torino(IT)
Inventor: Pelizzetti, Ezio
C.so Racconigi 162
Torino(IT)

(74) Representative: Cioni, Carlo et al
c/o ENIRICERCHE S.p.A. BRELID Via F.
Maritano 26
I-20097 San Donato Milanese(IT)

(54) **Process of photocatalytic degradation of bentazon.**

(57) The present invention relates to the use of heterogeneous photocatalysis for eliminating Bentazon (3-isopropyl-2,1,3-benzothiadiazinon-(4)-2,2-dioxide) from fresh waters.

Exposing aqueous solutions of bentazon (50 ppm) to light radiations of wavelengths ≥340 nm, for instance irradiations generated from an illumination source with a spectral distribution that simulates AM1 solar radiation, in the presence of titanium dioxide, the complete mineralization of pollutant herbicide is obtained quickly.

EP 0 334 078 A2

## PROCESS OF PHOTOCATALYTIC DEGRADATION OF BENTAZON

The present invention relates to a method of removal of Bentazon from water-bearing stratum for complete mineralization.

Bentazon is the common name for 3-isopropyl-2,1,3-benzothiadiazinon-(4)-2,2-dioxide, introduced in 1968 for the control of Matricaria, Anthemis, Galium Aparine, Stellaria media, Chrysanthemum segetum, Lapsana Communis. The acute oral LD50 for rats is about 1,100 mg/Kg and the dermal LD50 for rats is 2,500 mg/Kg.

The method object of the present invention consists of mineralization of Bentazon in aqueous environment by light energy in presence of $TiO_2$ as catalyst.

Mineralization means complete conversion of the carbon atoms framework of a compound into $CO_2$: in our case, for instance, exposing to irradiations 50 ml of an aqueous solution containing 50 mg of Bentazon, in presence of $TiO_2$ (1 g/1), till total disappearance of the herbicide, evolution of $2,1 \cdot 10^{-3}$ mol of $CO_2$ is observed.

Some technologies able to eliminate Bentazon from drinking water and from aquatic environment are already known, based either on physical processes or on chemical processes.

As for the former ones, carbon adsorbition can be used. This is a very economic but obviously non-destructive technology that turns a liquid contamination problem into the production of a hazardous solid which causes a new environmental problem.

Therefore chemical processes have been considered that use on the contrary a destructive approach. Not all chemical processes already used in the ambit of environmental protection as way of decontamination are proved applicable to this particular problem. Incineration, for example, is not very utilizable because Bentazon is too diluited, its concentration being of ppm. A sheet photolytic process i.e. using only U.V.-visible light, is ineffective on this kind of compound as it turns Bentazon into an equally toxic modified structure. UV light has a strong catalytic effect on oxidation reactions caused by ozone and, on the whole, a photolytic ozonation leads to the mineralization of Bentazon. But there are a lot of problems connected with the use of this technology. On one side the high cost linked to the production of ozone, on the other side the use of such a dangerous oxidant.

Now it has been found that subjecting Bentazon to a photocatalytic, heterogeneous process, where the catalyst is a semiconductor, particularly $TiO_2$, its complete mineralization is obtained.

This process doesn't use ozone and so is obviously cheaper than photolytic ozonation, without its safety problems.

The photochemical oxidation at the basis of the process of the present invention takes place at the interface betweeen liquid and semiconductor with Bentazon adsorbed on.

At first the light promotes an electron from the valence band of semiconductor to the conduction band. An electron-hole pair ($h^+ e^-$) forms and migrates at the interface where involves redox reactions.

It's already known that some substrata undergo conversion by heterogeneous photocatalysis. For example, carbon oxide is converted into $CO_2$ (Murpht, J. Catal. 1976, 43, 304) $CN^-$ and $SO_3^{2-}$ are oxidized (Frank. J.A.C.S., 1977, 99, 303. Franck J. Phys. Chem. 1977, 81, 1484), organic acids undergo decarboxylation (Kranetler, J.A.C.S. 1978, 100, 2239), hydrocarbons (Hashimito, J. Phy. Chem. 1984, 88, 4083), haloaliphatic and haloaromatic compounds (Ollis, Environ. Sci. Technol. 1985, 19, 480. Mattheus J. Cat. 1986, 97, 565), phenols and chlorinated phenols (Okamoto, Bull. Chem. Soc. Jpn. 1985, 58, 2015), polychlorinated dioxins (Tunesi Chemosphere 1987, 16, 1447) and triazines undergo oxidation and trasformations.

Now we have found that by heterogeneous photocatalysis the mineralization of Bentazon can be achieved and so this kind of process can be used in the field of environmental pollution as a method of treatment of fresh waters.

It wasn't deducible from the data already known in literature that a structure like Bentazon could be complitely mineralized in a process of photocatalytic degradation in the presence of $TiO_2$. In fact heterogeneous photocatalytic processes generally involve degradation of an organic structure but not always its complete mineralization: for example, if atrazine is subjected to a photocatalytic degradation in the presence of $TiO_2$, generation of $CO_2$ and formation of $NH_4$ Cl will be observed, but not in stoichiometric amount, while most of the final product consists of Cyanuric acid.

Some texts have been carried out on solutions containing 50 ppm Bentazon in natural water. Titanium oxide with a surface area of 55 $m^2/gr$ was employed and it can be used both as such and fixed on a suitable support that makes its removal, recovery and resuspension easy.

The support can be for example, glass beads on which a thin film of catalyst is deposited.

This layer is mechanically and chemically very stable and remains unaffected also in long term experiments.

Irradiation was carried out in a Solar simulator equipped with a 1500 W Xe lamp and a 340 nm cut off filter.

Irradiation intensity is 1 Kw/m2.

The spectral distribution of this illumination source simulates AMI solar radiation. The surface exposed to the light is of 10 cm². The experiment is carried out at 40°C and in the presence of air. Disappearance of Bentazon was monitored by gascromatography on capillary column. Formation of $CO_2$ is also detected and quantified by gascromatography.

In the following tables the results are reported about irradiation in above conditions of an aqueous solution of Bentazon in presence or absence of titanium dioxide and at different pH values.

50 ml of an aqueous solution containing 50 ppm of bentazon, undergone irradiation at pH 7 in presence of 1 g/l of $TiO_2$, has given the results collected in the following table:

| Time (min) | concentration (ppm) |
|---|---|
| 0 | 50,0 |
| 5' | 34,2 |
| 10' | 29,4 |
| 20' | 12,1 |
| 30' | 2,0 |
| 60' | 0,7 |

An experiment made in the same conditions without catalyst doesn't give rise to generation of $CO_2$. After 60 minutes Bentazon is present in concentration of 46,5 ppm and after 5 hours 19,0 ppm of still unreacted herbicide is recovered.

As reaction product an equally toxic modified Bentazon is obtained.

A decrease in catalyst concentration doesn't affect the performances of the process untill a threshold is exceeded beyond that the efficiency abates drastically. In the conditions of the above experiment with contents of catalyst of 0,5 g/l, the following results are obtained:

| Time (min) | concentration (ppm) |
|---|---|
| 0 | 50,0 |
| 5' | 35,8 |
| 10' | 29,3 |
| 20' | 18,3 |
| 30' | 9,4 |
| 60' | 0,4 |

In the same conditions, working with 0,1 g/l of $TiO_2$, worse results are observed that further worsen using 0,05 g/l of catalyst:

| Catalyst concentration | time (min) | Bentazon concentration |
|---|---|---|
| 0,1 g/l | 0 | 50,0 |
| | 15' | 35,8 |
| | 20' | 32,9 |
| | 30' | 27,7 |
| | 60' | 20,3 |
| | 90' | 3,7 |
| | 120' | 2,8 |

| Catalyst concentration | time (min) | Bentazon concentration |
|---|---|---|
| 0,05 g/l | 0 | 50,0 |
| | 15' | 42,4 |
| | 30' | 35,0 |
| | 60' | 23,8 |
| | 120' | 16,3 |
| | 180' | 2,4 |

The more favourable concentration of catalyst has resulted to be 0,5 g/l.

Using this $TiO_2$ concentration the process has been improved studying its dependence on pH conditions. Strongly acid conditions oppose this kind of reactions. A process made at pH = 2 by H2 $SO_4$ in the presence of 0,5 g/l of $TiO_2$ gives the following results:

| Time (min.) | concentration (ppm) |
|---|---|
| 0 | 50,0 |
| 5' | 45,6 |
| 10' | 42,6 |
| 20' | 31,9 |
| 30' | 25 |
| 60' | 10 |
| 90' | 7,9 |

Without catalyst the results get worse drastically also in acid ambient:

| Time (min.) | concentration(ppm) |
|---|---|
| 0 | 50,0 |
| 30' | 46,6 |
| 50' | 44,1 |
| 120' | 36,5 |
| 180' | 30,7 |
| 240' | 25,9 |

and a modification of bentazon is always recovered equally toxic.

On the contrary in presence of 0,5 g/l of Titanium dioxide, at pH = 7, but in buffer by a $10^{-2}M$ phosphate buffer, the best conditions for this process are obtained:

4

| Time (min.) | concentration(ppm) |
|---|---|
| 0 | 50,0 |
| 5′ | 21,0 |
| 10′ | 10,0 |
| 20′ | 1,2 |
| 30′ | 0,3 |
| 60′ | < 0,1 |

Also in this case a blank test has been carried out to show the need of catalyst presence:

| Time (min.) | concentration(ppm) |
|---|---|
| 0 | 50,0 |
| 30′ | 44,4 |
| 60′ | 32,9 |
| 120′ | 18,0 |
| 180′ | 12,5 |
| 240′ | 11,0 |

As anticipated, in the absence of catalyst, Bentazon is allowed to evolve to an equally toxic modified form. In conclusion therefore, with respect to already known processes for the removal of Bentazon herbicide that are difficult or too expensive to be used for water treatment, the method of the present invention represents a very interesting alternative.

In fact the complete destruction of the contaminant is observed in a short time without risking formation of equally toxic products. The process is really cheap also considering that the catalyst is repeatedly and easily recycled. The fact that Bentazon concentrations in fresh waters are very low, about ppm, does not create any problem. Such mild conditions and short reaction times further contribuite to make this process very cheap.

## Claims

1) A method of depurating waters from Bentazon which comprises subjecting said waters to light radiation of wavelength greater or equal to 340 nm, in the presence of titanium oxide as catalyst.

2) A method of depurating waters from Bentazon in accordance with claim 1 wherein the used light radiation simulates AM1 solar radiation.

3) A method of depurating waters from Bentazon in accordance with claim 1 carried out in buffer at pH7.

4) A method in accordance with claim 1 wherein titanium oxide is used as such or suitably supported.

5) A method in accordance with claim 1 wherein the oxygen required by the reaction is supplied by the air.